# EUROPÄISCHE PATENTSCHRIFT

(11) **EP 3 807 044 B1**
(45) Veröffentlichungstag und Bekanntmachung des Hinweises auf die Patenterteilung: **15.12.2021**
(21) Anmeldenummer: 19769398.9
(22) Anmeldetag: 05.09.2019
(51) Int. Cl.: B23Q 1/54, B23Q 1/01, B23Q 1/52

(54) **BEARBEITUNGSVORRICHTUNG ZUM BEARBEITEN VON WERKSTÜCKEN UND EIN VERFAHREN ZUM BEARBEITEN**
MACHINING DEVICE FOR MACHINING WORKPIECES AND METHOD FOR MACHINING
DISPOSITIF D'USINAGE POUR USINER DES PIÈCES ET PROCÉDÉ D'USINAGE

(43) Veröffentlichungstag der Anmeldung: 21.04.2021
(73) Patentinhaber: Lasch, Thorsten, 99880 Aspach (DE)
(72) Erfinder: Lasch, Thorsten, 99880 Aspach (DE)
(74) Vertreter: Schober, Mirko
(86) Internationale Anmeldenummer: PCT/EP2019/073700
(87) Internationale Veröffentlichungsnummer: WO 2021/043404

(56) Entgegenhaltungen:
- EP-A2- 0 305 735
- WO-A1-2006/032296
- DE-U1-202017 106 229
- JP-A- 2001 252 826

## Beschreibung

### TECHNISCHES GEBIET

Die Erfindung betrifft eine Bearbeitungsvorrichtung zum Bearbeiten von Werkstücken nach dem Oberbegriff des Anspruchs 1 und ein Verfahren zum Bearbeiten eines Werkstücks.

### STAND DER TECHNIK

Bei der Werkstückbearbeitung kommt es zum einen darauf an, ein Werkstück möglichst präzise bearbeiten zu können. Zum anderen spielt beim Bearbeitungsprozess natürlich auch die Bearbeitungsgeschwindigkeit eine Rolle. Kritisch ist in diesem Zusammenhang, dass natürlich das Werkstück mittels eines Werkzeugs, zum Beispiel ein Bohrer, ein Fräser oder eine Säge, zu bearbeiten ist, was bedeutet, dass dieses Werkzeug dem Werkstück zugestellt werden muss. Gleichzeitig müssen Werkstück und Werkzeug bei vorgegebener Bearbeitung relativ zueinander bewegt werden. In der Regel geschieht dies dadurch, dass das Werkstück und das Werkzeug relativ zueinander entlang linearer Achsen verfahren werden. Je nach Ausgestaltung der Bearbeitungsvorrichtung sind dabei natürlich Werkstückaufnahmen und Werkzeugaufnahmen vorhanden, die möglicherweise auch auf einem Schlitten oder Maschinenbett gelagert sein müssen. Bei den translatorischen Bewegungen kommt es so vor, dass mitunter große Massen über weite Wege bewegt werden müssen, um den Bearbeitungsprozess durchzuführen. In der Vergangenheit ist daher vorgeschlagen worden, werkzeugseitig oder werkstückseitig Drehachsen zu verwenden, um große translatorische Bewegungen großer Massen zu vermeiden. Solche Vorrichtungen, bei denen translatorische Bewegungen mit Drehbewegungen kombiniert werden, sind zum Beispiel aus US 4,115,956, EP 0 072 887 A1, EP 0 305 735 A2 oder DE 42 42 906 A1 bekannt. Alle diese Vorrichtungen weisen jedoch den Nachteil auf, dass sie über eine Vielzahl Translationsachsen und Rotationsachsen verfügen, was steuerungstechnisch kompliziert ist.

In JP 2001 252 826 A und DE 20 2017 106 229 U1, die die Basis für den Obergriff des Anspruchs 1 bilden, und in WO 2016/177452 A1 und GB 2 308 323 A wird vorgeschlagen, die üblichen translatorischen Bewegungen vollständig durch rotatorische Bewegungen zu ersetzen, wobei neben vier Drehachsen, nämlich jeweils zwei unmittelbar aufeinanderfolgende erste und zweite Drehachsen für das Werkstück und zwei unmittelbar aufeinanderfolgende erste und zweite Drehachsen für das Werkzeug, eine Translationsachse vorhanden ist, die dazu dient, das Werkzeug dem Werkstück zuzustellen. Die bekannten Vorrichtungen ersetzen also die Verschiebebewegungen durch Drehbewegungen, wobei die jeweiligen ersten Drehachsen horizontal verlaufen und dabei parallel zueinander ausgebildet sind, um den steuerungstechnischen Rechenaufwand zu minimieren.

Allerdings weisen auch diese Vorrichtungen ein gewisses Verbesserungspotenzial auf. Zum einen ist der erforderliche Bauraum solcher Anordnungen immer noch verhältnismäßig hoch, zum anderen muss gewährleistet sein, dass die Bestückung mit zu bearbeiteten Werkstücken reibungslos funktioniert.

### DIE ERFINDUNG

Aufgabe der Erfindung ist es daher, eine Bearbeitungsvorrichtung sowie ein Bearbeitungsverfahren anzugeben, mit deren Hilfe sich der Bauraum entsprechender Bearbeitungsvorrichtungen gegenüber dem Stand der Technik verringern lässt, wobei gleichzeitig die behinderungsfreie Bestückung der Bearbeitungsvorrichtung mit zu bearbeitenden Werkstücken bzw. die Entnahme fertig bearbeiteter Werkstücke gewährleistet ist.

Gelöst wird diese Aufgabe zum einen durch eine Bearbeitungsvorrichtung mit den Merkmalen des Anspruchs 1 sowie ein Verfahren mit den Merkmalen des Anspruchs 9. Vorteilhafte Ausführungsformen finden sich in den jeweiligen Unteransprüchen.

Der vorliegenden Erfindung liegt der Gedanke zugrunde, lange Verfahrwege dadurch zu vermeiden, dass ansonsten übliche translatorische Bewegungen über Drehachsen abgebildet werden. Werkstückaufnahme und Werkzeugaufnahme werden so relativ zueinander um Drehachsen rotiert und ersetzen somit eine aufwändige und langreichweitige translatorische Bewegung von zum Teil großen Massen.

Dazu ist eine Bearbeitungsvorrichtung zum Bearbeiten von Werkstücken vorgesehen, welche wenigstens einen ersten Vorrichtungsteil und wenigstens einen davon separat angeordneten zweiten Vorrichtungsteil aufweist. Dabei umfasst der erste Vorrichtungsteil die Werkstückaufnahme und der zweite Vorrichtungsteil die Werkzeugaufnahme.

Gemäß der vorliegenden Erfindung sind nun der erste Vorrichtungsteil und der zweite Vorrichtungsteil jeweils mit einer ersten Drehachse versehen, um welche der jeweilige Vorrichtungsteil drehbar ist. Weiterhin sind die Werkzeugaufnahme und die Werkstückaufnahme gegenüber dem jeweiligen Vorrichtungsteil zudem um jeweils eine zweite Drehachse drehbar ausgebildet. Auf diese Weise kann über eine entsprechende Maschinensteuerung und entsprechend eines vorgegebenen Bearbeitungsschemas eine relative Verstellung von Werkstück und Werkzeug über überlagerte Drehbewegungen erzielt werden.

Natürlich muss eine Zustellung des Werkzeugs an das Werkstück erfolgen. Dazu ist vorgesehen, dass die Werkzeugaufnahme gegenüber dem zweiten Vorrichtungsteil verschieblich ausgebildet ist. Mit dieser erfindungsgemäßen Anordnung lassen sich somit die relativen Verstellbewegungen zwischen Werkstück und Werkzeug während des Bearbeitungsvorgangs abbilden. Die Bearbeitungsvorrichtung weist demnach, insbesondere nur fünf, ansteuerbare Bearbeitungsachsen, nämlich vier Drehachsen und eine Translationsachse, auf. Dadurch wird es möglich, die beim Bearbeitungsprozess üblicherweise vorgesehene translatorische Bewegung zwischen Werkstück und Werkzeug durch Drehbewegungen um die Achsen D1, D2 sowie A1 und A2 zu ersetzen. Dadurch lassen sich die von bewegten Massen zurückzulegenden Wege gering halten und die Bearbeitungsvorrichtung wesentlich kompakter auslegen. Erfindungsgemäß sind die erste und zweite Drehachse der ersten Vorrichtung sowie die erste und zweite Drehachse sowie die Translationsachse des zweiten Vorrichtungsteils jeweils ohne Zwischenschritte einer weiteren Bearbeitungsachse aufeinanderfolgend angeordnet. Dadurch, dass die jeweils erste und zweite Drehachse und die zweite Drehachse und die Translationsachse unmittelbar aufeinanderfolgend angeordnet sind, ist keine weitere Bearbeitungsachse und damit verbunden kein weiterer Freiheitsgrad vorgesehen, so dass die Bearbeitung mit nur fünf Bearbeitungsachsen erfolgt.

Erfindungsgemäß verläuft dabei die erste Drehachse des zweiten Vorrichtungsteils zumindest mit einer Richtungskomponente in einer senkrecht zum Aufstellboden der Bearbeitungsvorrichtung definierten Vertikalrichtung Z und die erste Drehachse des ersten Vorrichtungsteils verläuft mit einer Richtungskomponente in Horizontalrichtung X der Bearbeitungsvorrichtung und dabei windschief zur ersten Drehachse. Windschief ist hier im mathematischen Sinne zu verstehen, wonach zwei Achsen windschief zueinanderstehen, wenn sie weder parallel zueinander verlaufen noch einen gemeinsamen Schnittpunkt aufweisen.

Bearbeitungsachsen im Sinne der Erfindung sind solche Achsen, die während der Bearbeitung des Werkstücks durch das Werkzeug von einer Maschinensteuerung angesteuert werden.

Es kann eine erfindungsgemäße Vorrichtung weitere Achsen zur Verstellung der beiden Vorrichtungsteile aufweisen, dabei handelt es sich dann allerdings nicht um Bearbeitungsachsen, sondern um solche Achsen, die eine Verstellung der beiden Vorrichtungsteile außerhalb des eigentlichen Bearbeitungsprozesses ermöglichen.

So ergibt sich folgende Konfiguration, bei der von einem Maschinenbett oder einer Lagerung der beiden Vorrichtungsteile zum Werkstück bzw. vom Maschinenbett oder einer Lagerung der beiden Vorrichtungsteile zum Werkzeug folgende Reihenfolge aufeinanderfolgender angesteuerter bzw. während des Bearbeitungsverfahrens ansteuerbarere Bearbeitungsachsen möglich ist:
Erste Drehachse/zweite Drehachse für das erste Vorrichtungsteil und erste Drehachse/zweite Drehachse/ Translationsachse für das zweite Vorrichtungsteil.

In einer bevorzugten Ausführungsform verläuft die erste Drehachse des zweiten Vorrichtungsteils parallel oder in einem Winkel von höchstens 45° zur Vertikalrichtung Z. Durch die Senkrechtstellung bzw. weitestgehend Aufrechtstellung der ersten Drehachse ist es möglich, das zweite Vorrichtungsteil, das das Werkzeug trägt, raumsparend, insbesondere flächensparend anzuordnen. Selbst bei einer möglichen beidseitigen Lagerung dieser Drehachse, die eine hohe Positionsgenauigkeit des Werkzeugs ermöglicht, ist der Flächenbedarf der zweiten Vorrichtung gering, auch wenn die Lager der Drehachse weiter auseinander liegend angeordnet sind.

In einer anderen bevorzugten Ausführungsform verläuft die erste Drehachse des ersten Vorrichtungsteils in einem Winkel, insbesondere senkrecht, zur ersten Drehachse des zweiten Vorrichtungsteils und/oder parallel zur Horizontalrichtung X. Dadurch bedingt, dass die Träger der Lager und Antriebe der jeweils zweiten Drehachse nicht auf einer parallelen zueinander stehenden ersten Drehachse geführt werden, ist der überlappende Raumbedarf bei den Bearbeitungsbewegungen geringer, so dass die beiden Vorrichtungsteile enger zueinander stehend angeordnet werden können und so den Raumbedarf weiter verringern. Auch die Antriebe der jeweils ersten Drehachsen werden bei einer derartigen Anordnung nicht in einer Ebene nebeneinander angeordnet, wobei dann bei der Anordnung der Antriebe auf den Raumbedarf des jeweils anderen Antriebs keine Rücksicht genommen werden muss.

Nach einer besonders bevorzugten Ausführungsform ist der erste Vorrichtungsteil nur einseitig um dessen erste Drehachse drehbar gelagert. Eine einseitige Lagerung des ersten Vorrichtungsteils hat zwei Vorteile. Zum einen wird die Bauhöhe in Achsrichtung geringer, da die zweite, gegenüberliegende Lagerung der Drehachse entfällt, zum anderen wird durch das Fehlen der zweiten Lagerung der Zugangsbereich zur Aufnahme des Werkstücks für einen Bediener und/oder einen Bestückungsroboter und/oder einer Zuführungsanordnung vergrößert.

In einer weiteren besonders bevorzugten Ausführungsform ist der zweite Vorrichtungsteil (20) zweiseitig um dessen erste Drehachse (A1) drehbar gelagert. Die zweiseitige Lagerung erlaubt eine präzisere Führung des zu drehenden Teils. Da die Drehachse senkrecht oder zumindest weitestgehend aufrecht angeordnet ist, wird durch die zweiseitige Lagerung der Flächenbedarf des zweiten Vorrichtungsteils nicht oder kaum vergrößert.

Ergänzend hierzu sind nach einer weiteren bevorzugten Ausführungsform die Werkzeugaufnahme und/oder die Werkstückaufnahme über einen Drehteller oder über einen anderweitig gestalteten Drehmechanismus drehbar ausgebildet. Hierbei kann der Drehteller oder Drehmechanismus über einen entsprechenden Motor positionsgenau verstellt werden. Außerdem ermöglicht der Drehteller oder Drehmechanismus auch eine große Variabilität hinsichtlich der verwendeten Werkzeugträger oder Werkstücke.

Nach einer besonderen Ausführungsform kann vorgesehen sein, dass die zweite Drehachse des jeweiligen Vorrichtungsteils nicht parallel, insbesondere senkrecht, zur jeweiligen ersten Drehachse des jeweiligen Vorrichtungsteils verläuft. Auch hiermit lassen sich insbesondere bei der senkrechten Ausführung die Ansteuerung und die dafür erforderliche Steuersoftware besonders vorteilhaft gestalten und Rechenaufwand minimieren.

Als besonders vorteilhaft hat es sich erwiesen, wenn die zweiten Drehachsen relativ zu den zughörigen Vorrichtungsteilen ortsfest angeordnet sind. Dies bedeutet, dass es keine Verschiebung, wie beispielsweise eine translatorische Bewegung, der zweiten Drehachse gegenüber dem Vorrichtungsteil gibt. Von Vorteil ist es dabei, wenn die beiden Drehachsen der jeweiligen Vorrichtungsteile nicht windschief zueinander angeordnet sind, sondern in einer Ebene liegen, sich also kreuzen. Diese Anordnung vereinfacht die Positionierung vom Werkstück zum Werkzeug erheblich. Vorteilhafterweise kann an dem ersten Vorrichtungsteil der Kreuzungspunkt der beiden Drehachsen in dem Werkstück liegen, das an dem Vorrichtungsteil angeordnet ist. Dadurch werden die Kräfte, die notwendig sind, um das Werkstück zu bewegen, verringert.

Das erfindungsgemäße Verfahren zur Bearbeitung eines Werkstücks wird mittels der oben beschriebenen Bearbeitungsvorrichtung durchgeführt. Dabei werden folgende Schritte ausgeführt:
- Anordnen des Werkstücks an einer Werkstückaufnahme,
- Anordnen eines Werkzeugs an einer Werkzeugaufnahme,
- Bearbeiten des Werkstücks, wobei die relative Position zwischen Werkstück und Werkzeug durch Drehen des Werkstücks um die zugehörige erste und/oder die zugehörige zweite Drehachse und/oder Drehen des Werkzeugs um die zugehörige erste Drehachse und/oder die zugehörige zweite Drehachse eingestellt wird und wobei die Werkzeugaufnahme gegenüber den zweiten Vorrichtungsteil entsprechend der Arbeitsposition über die translatorische Achse verschoben wird.

Alle vorstehend genannten Achsen sind Bearbeitungsachsen im Sinne der Erfindung, die mittels einer Maschinensteuerung entsprechend des gewünschten Bearbeitungsvorgangs zur Änderung der Drehlage oder Translationslage angesteuert werden, um eine Relativbewegung zwischen Werkzeug und Werkstück zu realisieren.

Als vorteilhaft hat es sich erwiesen, wenn die translatorische Verschiebung der Werkzeugaufnahme relativ gegenüber der zugehörigen zweiten Drehachse erfolgt.

### KURZBESCHREIBUNG DER ZEICHNUNGSABBILDUNG

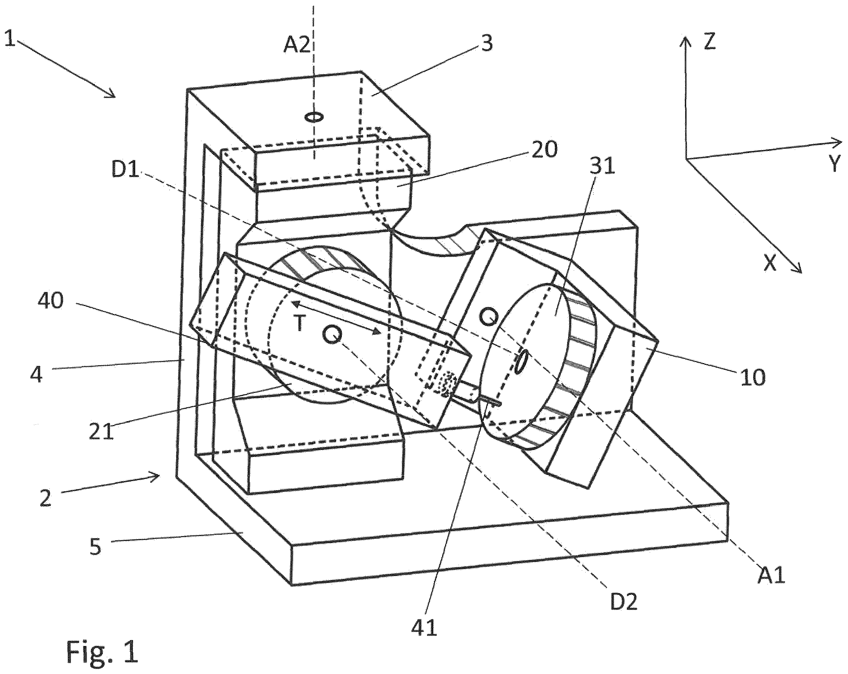

Die Erfindung wird nachfolgend anhand des in der Figur 1 gezeigten Ausführungsbeispiels näher erläutert.
- Figur 1 -: zeigt eine Ausführungsform der vorliegenden Erfindung in perspektivischer, schematischer Darstellung.

### BESTER WEG ZUR AUSFÜHRUNG DER ERFINDUNG

Die erfindungsgemäße Vorrichtung weist mindestens zwei, zum Beispiel blockartige, Vorrichtungsteile 10 und 20 auf. Jeder dieser Vorrichtungsteile 10, 20 ist um eine erste Drehachse A1 bzw. A2 drehbar gelagert. Die Vorrichtungsteile 10, 20 dienen der Unterbringung eines Werkstücks 30 (nicht gezeigt) bzw. eines Werkzeugträgers 40, der ein oder mehrere Werkzeuge 41 aufnehmen kann. Insbesondere kann es sich bei dem Werkzeugträger 40 um einen Wechselwerkzeugträger handeln. Sowohl das Werkstück 30, welches am ersten Vorrichtungsteil 10 in einer nicht im Detail dargestellten Werkstückaufnahme aufgenommen ist, als auch der Werkzeugträger 40 sind jeweils gegenüber dem zugehörigen Vorrichtungsteil 10, 20 um zweite Drehachsen D1 bzw. D2 drehbar gelagert, z.B. in einer drehbaren Werkzeug- bzw. Werkstückaufnahme. Dazu kann es sich, wie im gezeigten Beispiel angedeutet, anbieten, das Werkstück 30 auf einem als Werkstückaufnahme dienenden Drehteller 31 unterzubringen, welcher wiederum drehbar um die Drehachse D1 am ersten Vorrichtungsteil 10 gelagert ist. Ebenso kann der Werkzeugträger 40 bzw. die Werkzeugaufnahme auf einem Drehteller 21 angeordnet sein, der auf dem Vorrichtungsteil 20 gelagert ist. Bevorzugt sind die Drehachsen D1 und D2 jeweils senkrecht zu den zugehörigen Drehachsen A1 und A2 angeordnet. Andere Anordnungen sind natürlich ebenso denkbar. Natürlich müssen zur Drehung um die zweiten Drehachsen D1 bzw. D2 nicht zwingend Drehteller verwendet werden, es sind auch andere Drehmechanismen denkbar.

Das zweite Vorrichtungsteil 20, das den Werkzeugträger 40 mit dem Werkzeug 41 trägt, ist in diesem Ausführungsbeispiel so angeordnet, dass die erste Drehachse A2 senkrecht steht. Das Vorrichtungsteil 20 hat die größte Ausdehnung längs der ersten Drehachse A2, weil neben dem Drehteller 21 die jeweils gekröpften Lagerenden angeordnet sind. Diese längste Ausdehnung ist in diesem Ausführungsbeispiel senkrecht gestellt, so dass die Ausdehnung in der horizontalen Ebene X-Y gering gehalten wird. Gelagert wird das zweite Vorrichtungsteil 20 am Maschinenbett 2 unten an der Tragplatte 5 und oben an der oberen Lagerplatte 3, wodurch eine sehr präzise Führung des Werkzeugs 41 möglich wird. Der (hier nicht gezeigte) Antrieb der Achse A2 ist unter und/oder über dem Bearbeitungsraum angeordnet, der von den Vorrichtungsteilen 10, 20 beansprucht wird.

Das erste Vorrichtungsteil 10 ist drehbar um die Drehachse A1 an der Rückwand 4 angeordnet und dabei einseitig gelagert. Der Antrieb ist hinter dem Bearbeitungsraum angeordnet und hat damit keinen Raumkonflikt mit dem Antrieb der Drehachse A2 des zweiten Vorrichtungsteils 20. Dadurch können die beiden Vorrichtungsteile 10, 20 näher zusammenrücken, wodurch sich der Flächenbedarf in der Ebene weiter verringert. Durch die einseitige Lagerung des ersten Vorrichtungsteils 10 wird der Raum vor der Werkstückaufnahme am Drehteller 31 freigehalten, wodurch zum einen der Flächenbedarf des ersten Vorrichtungsteils gering bleibt und zum anderen der Zugang zur Werkstückaufnahme erleichtert wird. So kommt ein Bediener, ein Roboter oder eine Zuführungsvorrichtung nahe an die Werkstückaufnahme heran und kann so zuverlässig und genau die Werkstücke platzieren. Dabei ist es dann auch von Vorteil, wenn die erste Drehachse A1 waagerecht angeordnet ist, denn dann kann der Drehteller 31 mit der Werkstückaufnahme so gedreht werden, dass er waagerecht ausgerichtet ist, was das Platzieren und Ausrichten von, insbesondere schweren, Werkstücken erleichtert.

Schließlich ist im gezeigten Beispiel vorgesehen, dass der Werkzeugträger 40 noch eine translatorische Achse T aufweist, die es ermöglicht, den Werkzeugträger 40 und damit das daran aufgenommene Werkzeug 41 in Richtung auf das Werkstück 30 zuzustellen. Dies geschieht beispielsweise über einen Schlitten, der in Pfeilrichtung T bewegt werden kann. Die translatorische Verschiebung kann natürlich durch andere Hilfsmittel als den hier gezeigten Schlitten geschehen, beispielsweise Linearantriebe oder dergleichen.

Bereits mit dieser Konfiguration lassen sich Werkzeug 41 und Werkstück 30 beliebig relativ zueinander positionieren, wobei die Vorrichtungsteile 10, 20 selbst nur um die Achsen A1 bzw. A2 verschwenkt werden müssen und ansonsten lediglich das Werkstück 30 und das Werkzeug 41 relativ zueinander über die Achsen D1 und D2 gedreht werden. Es wird also eine eigentlich vorgesehene translatorische Bewegung zwischen Werkstück 30 und Werkzeug 41 durch Drehbewegungen um die Achsen D1, D2 sowie A1 und A2 ersetzt.

Mit der erfindungsgemäßen Vorrichtung ist es daher möglich, die insbesondere massiv ausgebildeten Vorrichtungsteile 10, 20, die im Grunde als Lagerblöcke für darauf angeordnete Drehteller 21, 31, Werkzeugträger 40 und Werkstücke 30 dienen, nur minimal zu bewegen (zu verschwenken), sodass große Massen verhältnismäßig kleine Bewegungswege ausführen müssen. Ebenso verhält es sich mit den Werkstücken 30 und dem Werkzeugträger 40, die ihrerseits bei der Bearbeitung des Werkstücks 30 auch nur geringe Drehbewegungen ausführen und nicht aufwendig und über große Entfernungen transla-torisch verschoben werden müssen.

Beim erfindungsgemäßen Verfahren werden die genannten Bearbeitungsachsen mittels einer hier nicht gezeigten Maschinensteuerung, die aber Teil der Bearbeitungsvorrichtung sein kann, entsprechend dem auszuführenden Bearbeitungsprozess angesteuert, sodass sich eine relative Bewegung zwischen Werkstück und Werkzeug entsprechend eines vorgegebenen Bewegungsweges einstellt.

## Patentansprüche

1. Bearbeitungsvorrichtung (1) zum Bearbeiten von Werkstücken (30), mit wenigstens einem ersten Vorrichtungsteil (10) und wenigstens einem davon separat angeordneten zweiten Vorrichtungsteil (20), wobei die Bearbeitungsvorrichtung, insbesondere nur fünf, ansteuerbare Bearbeitungsachsen, nämlich vier Drehachsen (A1, A2, D1, D2) und eine Translationsachse (T), aufweist, wobei:
- der erste Vorrichtungsteil (10) eine Werkstückaufnahme aufweist und der zweite Vorrichtungsteil (20) eine Werkzeugaufnahme (40) aufweist,
- der erste Vorrichtungsteil (10) und der zweite Vorrichtungsteil (20) jeweils eine erste Drehachse (A1; A2) aufweisen, um welche der jeweilige Vorrichtungsteil (10, 20) drehbar ist,
- die Werkzeugaufnahme (40) und die Werkstückaufnahme gegenüber dem jeweiligen Vorrichtungsteil (10; 20) um eine zweite Drehachse (D1; D2) drehbar ist, und
- die Werkzeugaufnahme (40) gegenüber dem zweiten Vorrichtungsteil (20) verschieblich ausgebildet ist,
wobei die erste und zweite Drehachse (A1, D1) des ersten Vorrichtungsteils (10) sowie die erste und zweite Drehachse (A2, D2, T) sowie die Translationsachse (T) des zweiten Vorrichtungsteils (20) jeweils ohne Zwischenschaltung einer weiteren Bearbeitungsachse aufeinander folgend angeordnet sind,
wobei die erste Drehachse (A2) des zweiten Vorrichtungsteils (20) zumindest mit einer Richtungskomponente in einer senkrecht zum Aufstellboden der Bearbeitungsvorrichtung definierten Vertikalrichtung (Z) verläuft
, **dadurch gekennzeichnet, dass**
die erste Drehachse (A1) des ersten Vorrichtungsteils (10) mit einer Richtungskomponente in Horizontalrichtung (X) der Bearbeitungsvorrichtung und dabei windschief zur ersten Drehachse (A2) des zweiten Vorrichtungsteils (20) verläuft.

2. Bearbeitungsvorrichtung nach Anspruch 1,
**dadurch gekennzeichnet,**
**dass** die erste Drehachse (A2) des zweiten Vorrichtungsteils (20) parallel oder in einem Winkel von höchstens 45° zur Vertikalrichtung (Z) verläuft.

3. Bearbeitungsvorrichtung nach einem der vorigen Ansprüche,
**dadurch gekennzeichnet,**
**dass** die erste Drehachse (A1) des ersten Vorrichtungsteils (10) in einem Winkel, insbesondere senkrecht, zur ersten Drehachse (A2) des zweiten Vorrichtungsteils (20) und/oder parallel zur Horizontalrichtung (X) verläuft.

4. Bearbeitungsvorrichtung nach einem der vorigen Ansprüche,
**dadurch gekennzeichnet,**
**dass** der erste Vorrichtungsteil (10) nur einseitig um dessen erste Drehachse (A1) drehbar gelagert ist.

5. Bearbeitungsvorrichtung nach einem der vorigen Ansprüche,
**dadurch gekennzeichnet,**
**dass** der zweite Vorrichtungsteil (20) zweiseitig um dessen erste Drehachse (A1) drehbar gelagert ist.

6. Bearbeitungsvorrichtung nach Anspruch 1,
**dadurch gekennzeichnet,**
**dass** die Werkzeugaufnahme (40) und/oder die Werkstückaufnahme über einen Drehteller (31; 21) drehbar sind.

7. Bearbeitungsvorrichtung nach einem der vorigen Ansprüche,
**dadurch gekennzeichnet,**
**dass** die zweite Drehachse (D1; D2) des jeweiligen Vorrichtungsteils (10, 20) nicht parallel, insbesondere senkrecht, zur jeweiligen ersten Drehachse (A1; A2) des jeweiligen Vorrichtungsteils (10, 20) verläuft.

8. Bearbeitungsvorrichtung nach einem der vorigen Ansprüche,
**dadurch gekennzeichnet,**
**dass** die zweiten Drehachsen (D1, D2) relativ zu den zughörigen Vorrichtungsteilen (10, 20) ortsfest angeordnet sind.

9. Verfahren zur Bearbeiten eines Werkstücks (30) mit einer Bearbeitungsvorrichtung gemäß einem der vorigen Ansprüche aufweisend folgende Schritte:
- Anordnen des Werkstücks (30) an einer Werkstückaufnahme,
- Anordnen eines Werkzeugs (41) an einer Werkzeugaufnahme (40),
- Bearbeiten des Werkstücks (30), wobei die relative Position zwischen Werkstück (30) und Werkzeug (41) durch Drehen des Werkstücks (30) um die zugehörige erste und/oder die zugehörige zweite Drehachse (A1, D1) und/oder Drehen des Werkzeugs (41) um die zugehörige erste Drehachse (A2) und/oder die zugehörige zweite Drehachse (D2) eingestellt wird und
- wobei die Werkzeugaufnahme (40) gegenüber dem zweiten Vorrichtungsteil (20) entsprechend der Arbeitsposition über die translatorische Achse (T) verschoben wird.

10. Verfahren nach Anspruch 9
**dadurch gekennzeichnet,**
**dass** die translatorische Verschiebung der Werkzeugaufnahme (40) relativ gegenüber der zugehörigen zweiten Drehachse (D2) erfolgt.

## Claims

1. Machining device (1) for machining workpieces (30), having at least one first device part (10) and at least one second device part (20) which is arranged separately therefrom, wherein the machining device has in particular only five controllable machining axes, namely four rotational axes (A1, A2, D1, D2) and one translational axis (T), wherein:
- the first device part (10) has a workpiece receptacle and the second device part (20) has a tool receptacle (40),
- the first device part (10) and the second device part (20) each have a first rotational axis (A1; A2) about which the respective device part (10, 20) is able to rotate,
- the tool receptacle (40) and the workpiece receptacle are rotatable relative to the respective device part (10; 20) about a second rotational axis (D1; D2), and
- the tool receptacle (40) is formed displaceable relative to the second device part (20),
wherein the first and the second rotational axis (A1, D1) of the first device part (10) as well as the first and second rotational axis (A2, D2, T) as well as the translational axis (T) of the second device part (20) are each arranged in succession without the interposition of a further machining axis, wherein the first rotational axis (A2) of the second device part (20) runs at least with one directional component in a vertical direction (Z) defined perpendicular to the installation base of the machining device,
**characterised in that**
the first rotational axis (A1) of the first device part (10) runs with one directional component in the horizontal direction (X) of the machining device and thus obliquely to the first rotational axis (A2) of the second device part (20).

2. Machining device according to claim 1
**characterised in that**
the first rotational axis (A2) of the second device part (20) runs parallel or at an angle of at most 45° to the vertical direction (Z).

3. Machining device according to one of the preceding claims
**characterised in that**
the first rotational axis (A1) of the first device part (10) runs at an angle, in particular perpendicular, to the first rotational axis (A2) of the second device part (20) and/or parallel to the horizontal direction (X) .

4. Machining device according to one of the preceding claims
**characterised in that**
the first device part (10) is mounted only on one side rotatable about its first rotational axis (A1).

5. Machining device according to one of the preceding claims
**characterised in that**
the second device part (20) is mounted on both sides rotatable about its first rotational axis (A1).

6. Machining device according to claim 1
**characterised in that**
the tool receptacle (40) and/or the workpiece receptacle are rotatable via a rotary plate (31; 21).

7. Machining device according to one of the preceding claims
**characterised in that**
the second rotational axis (D1; D2) of the respective device part (10, 20) does not run parallel, in particular perpendicular, to the respective first rotational axis (A1; A2) of the respective device part (10, 20).

8. Machining device according to one of the preceding claims
**characterised in that**
the second rotational axes (D1, D2) are arranged fixed in position relative to the associated device parts (10, 20).

9. Method for machining a workpiece (30) with a machining device according to one of the preceding claims comprising the following steps:
- arranging the workpiece (30) on a workpiece receptacle,
- arranging a tool (41) on a tool receptacle (40);
- machining the workpiece (30), wherein the relative position between the workpiece (30) and tool (41) is set by rotating the workpiece (30) about the associated first and/or the associated second rotational axis (A1, D1) and/or rotating the tool (41) about the associated first rotational axis (A2) and/or the associated second rotational axis (D2), and
- wherein the tool receptacle (40) is displaced relative to the second device part (20) via the translational axis (T) according to the working position.

10. Method according to claim 9
**characterised in that**
the translational movement of the tool receptacle (40) takes place relative to the associated second rotational axis (D2) .

## Revendications

1. Dispositif d'usinage (1) pour usiner des pièces (30), avec au moins une première partie de dispositif (10), et au moins une deuxième partie de dispositif (20), agencé distincte de celle-ci, dans lequel le dispositif d'usinage comporte en particulier uniquement cinq axes d'usinage commandables, à savoir quatre axes de rotation (A1, A2, D1, D2) et un axe de translation (T), dans lequel
- la première partie de dispositif (10) comporte un porte-pièce et la deuxième partie de dispositif (20) comporte un porte-outil (40),
- la première partie de dispositif (10) et la deuxième partie de dispositif (20) comportent respectivement un premier axe de rotation (A1; A2), autour duquel la partie de dispositif respective (10, 20) peut tourner,
- le porte-outil (40) et le porte-pièce peuvent tourner autour d'un deuxième axe de rotation (D1; D2) par rapport à la partie de dispositif respective (10; 20), et
- le porte-outil (40) est conçu de manière à pouvoir être déplacé par rapport à la deuxième partie de dispositif (20), dans lequel le premier et le deuxième axe de rotation (A1, D1) de la première partie de dispositif (10), ainsi que le premier et le deuxième axe de rotation (A2, D2, T) ainsi que l'axe de translation (T) de la deuxième partie de dispositif (20) sont agencés à la suite les uns des autres sans montage intermédiaire d'un axe d'usinage supplémentaire, dans lequel le premier axe de rotation (A2) de la deuxième partie de dispositif (20) s'étend avec au moins une composante de direction dans une direction verticale (Z) définie perpendiculaire à la surface d'appui du dispositif d'usinage,
**caractérisé en ce que**
le premier axe de rotation (A1) de la première partie de dispositif (10) s'étend avec une composante de direction dans la direction horizontale (X) du dispositif d'usinage, et s'étend ainsi de manière inclinée par rapport au premier axe de rotation (A2) de la deuxième partie de dispositif (20).

2. Dispositif d'usinage selon la revendication 1,
**caractérisé en ce**
**que** le premier axe de rotation (A2) de la deuxième partie de dispositif (20) s'étend parallèlement ou à un angle ne dépassant pas 45° à la direction verticale (Z) .

3. Dispositif d'usinage selon l'une quelconque des revendications précédentes,
**caractérisé en ce**
**que** le premier axe de rotation (A1) de la première partie de dispositif (10) s'étend à un angle, surtout vertical, au premier axe de rotation (A2) de la deuxième partie de dispositif (20) et / ou parallèlement à la direction horizontale (X).

4. Dispositif d'usinage selon l'une quelconque des revendications précédentes,
**caractérisé en ce**
**que** la première partie de dispositif (10) n'est monté que d'un côté de manière rotative autour de son premier axe de rotation (A1).

5. Dispositif d'usinage selon l'une quelconque des revendications précédentes,
**caractérisé en ce**
**que** la deuxième partie de dispositif (20) est montée de deux côtés de manière rotative autour de son premier axe de rotation (A1).

6. Dispositif d'usinage selon la revendication 1,
**caractérisé en ce**
**que** le porte-outil (40) et / ou le porte-pièce peuvent tourner par l'intermédiaire d'un plateau tournant (31; 21) .

7. Dispositif d'usinage selon l'une quelconque des revendications précédentes,
**caractérisé en ce**
**que** le deuxième axe de rotation (D1; D2) de la partie de dispositif respective (10, 20) ne s'étend pas parallèlement, surtout verticalement, par rapport au premier axe de rotation respectif (A1; A2) de la partie de dispositif respective (10, 20).

8. Dispositif d'usinage selon l'une quelconque des revendications précédentes,
**caractérisé en ce**
**que** les deuxièmes axes de rotation (D1; D2) sont agencés de manière fixe par rapport aux parties de dispositif associées (10, 20).

9. Procédé pour usiner une pièce (30) avec un dispositif d'usinage selon l'une quelconque des revendications précédentes, comportant les étapes suivantes :
- positionnement de la pièce (30) à un porte-pièce,
- positionnement d'un outil (41) à un porte-outil (40),
- usinage de la pièce (30), dans lequel la position relative entre la pièce (30) et l'outil (41) est ajustée en tournant la pièce (30) autour du premier axe de rotation associé (A1) et / ou le deuxième axe de rotation associé (D1), ou en tournant l'outil (41) autour du premier axe de rotation associé (A2) et / ou le deuxième axe de rotation associé (D2), et
- dans lequel le porte-outil (40) est déplacé par rapport à la deuxième partie de dispositif (20), selon la position de travail, sur l'axe de translation (T).

10. Procédé selon la revendication 9,
**caractérisé en ce**
**que** le déplacement translationnel du porte-outil (40) est effectué relativement par rapport au deuxième axe de rotation associé (D2).
